# EUROPEAN PATENT APPLICATION

(11) **EP 1 559 728 A1**
(43) Date of publication of application: **03.08.2005**
(21) Application number: 04290228.8
(22) Date of filing: 28.01.2004
(51) Int. Cl.: C08F 10/00, C08F 4/642, C08F 4/70, C07C 2/32

(54) **Grafting of transition metal complexes on supports**

(71) Applicant: TOTAL PETROCHEMICALS RESEARCH FELUY, 7181 Seneffe (Feluy) (BE); CENTRE NATIONAL DE LA RECHERCHE SCIENTIFIQUE (CNRS) Etablissement Public, 75016 Paris (FR)
(72) Inventor: Banet, Philippe, 66000 Perpignan (FR); Brunel, Daniel, 34090 Montpellier (FR); Fajula, François, 34160 Teyran (FR); Lerner, 34090 Montpellier (FR); Razavi, Abbas, 7000 Mons (FR)
(74) Representative: Roufosse, Micheline C.

(57) **Abstract**

The present invention discloses a method for supporting a transition metal complex and the resulting supported catalyst component which is characterised in that the metallic sites are kept away from one another and kept away from the surface of the support.

## Description

The present invention relates to the preparation of supported catalyst systems based on late transition metal complexes.

Polymers of ethylene and other olefins are of major commercial appeal. These polymers have a very large number of uses, ranging from low molecular weight products for lubricants and greases, to higher molecular weight products for manufacturing fibres, films, moulded articles, elastomers, etc. In most cases, the polymers are obtained by catalytic polymerisation of olefins using a compound based on a transition metal. The nature of this compound has a very strong influence on the properties of the polymer, its cost and its purity. Given the importance of polyolefins, there is a permanent need to improve the catalytic systems in order to propose new systems.

There is a variety of homogeneous or heterogeneous catalysts for the polymerisation or copolymerisation of ethylene. Among the families that are most widely known, examples that may be mentioned include the "Ziegler-type" catalysts involving organometallic complexes of metals from groups III and IV or "Philipps-type" catalysts involving chromium complexes. Metallocene catalyst system offer a large variety of possibilities to create single site systems by varying the nature and size of the substituents both on the cyclopentadienyl rings and on the bridge. There are also nickel-based catalysts, which have been used for many years for polymerising α-olefins. Certain systems also have a certain level of tolerance toward polar media.

Among the many catalytic systems presented in the literature, some inventions disclose the in situ formation of the active species in the polymerisation medium. Examples that have been described include the combination between a nickel complex with benzoic acid derivatives such as disclosed for example in US-A-3,637,636 or with tertiary organophosphorous ligands such as disclosed in US-A-3,635,937 or in US-A-3,647,914 or alternatively with glycolic, thioglycolic or thiolactic acid such as disclosed in US-A-3,661,803. US-A-3,686,159 describes the use of a complex of nickel in oxidation state zero with a phosphorus ylide ligand.

Other methods such as disclosed for example in US-A-4,716,205 or BG-60,319 describe active polymerisation systems comprising an isolated catalytic system and an acceptor compound capable of extracting one of the ligands from the nickel complex.

It is also known in the art to use complexes of Ni, Co, Pd and Fe in the polymerisation of olefins as described for example in WO-96/23010. That document discloses particularly selected α-diimine nickel complexes used in combination with a selected Lewis or Bronsted acid for the copolymerisation of ethylene. The most commonly used activating agent for these complexes is also MAO.

Late transition metal complexes and their use in homogeneous polymerisation are broadly described for example in Ittel et al. (S. T. Ittel, L.K. Johnson and M. Brookhart, in Chem. Rev. 2000, 1169.) or in Gibson and Spitzmesser (V.C. Gibson, S.K. Spitzmesser, in Chem. Rev. , 2003, 283.)

There is a need to prepare heterogeneous catalyst systems based on late transition metal complexes for use in the polymerisation of olefins.

It is an aim of the present invention to provide heterogeneous catalyst systems based on late transition metal complexes for use in the polymerisation of olefins.

It is also an aim of the present invention also to provide monosites supported catalyst systems for preparing polyolefins.

It is a further aim of the present invention further to provide hardened catalyst grains for use in gas phase or slurry polymerisation processes.

It is yet another aim of the present invention to favour fragmentation of the catalyst grains.

It is yet a further aim of the present invention to provide a method for preparing polymers having improved morphology.

It is also an aim of the present invention to provide a method for preparing free flowing polymer resin thereby reducing reactor fouling.

Accordingly, the present invention provides in a first embodiment, a method for supporting late transition metal complex that comprises the steps of:
a) providing a support prepared from a porous material;
b) grafting on the surface of the support:
   (i) a silane of general formula RₙR'₃₋ₙ - Si - L - X wherein R is alkyl having from 1 to 4 carbon atoms and the R are the same or different, R' is halogen or is alkoxy having from 1 to 12 carbon atoms and the R' are the same or different, n is an integer from 0 to 2, L is a rigid or a flexible "linker" or arm and X is a functional group enabling covalent bonding by addition or substitution reaction;
   (ii) a dispersing agent that is compatible with the silane (i) in morphology, in size, in nature and in grafting capability onto the support, but has no functional group X, and wherein the ratio of silane to dispersing agent is of from 1:20 to 1:1, preferably, 1:10 to 1:8;
c) optionally curing and passivating the grafted support;
d) providing a precursor compound of general formula I or II dissolved in a polar solvent 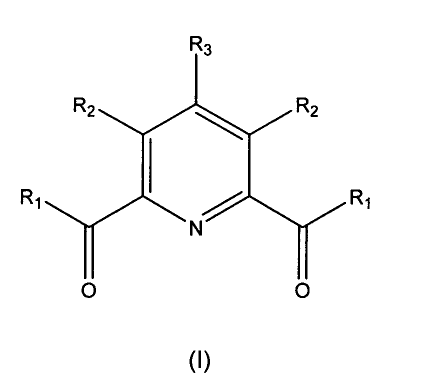 or 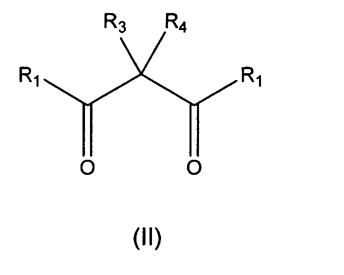 wherein R¹ is hydrogen, hydrocarbyl, substituted hydrocarbyl, inert functional group and the R¹ are the same or different, R² is hydrogen, hydrocarbyl, substituted hydrocarbyl, inert functional group and the R² are the same or different, R³ is functional substituted hydrocarbyl, reactive functional group and this functional group is able to react with X of the silane and R⁴ is hydrogen, hydrocarbyl, substituted hydrocarbyl, inert functional group and wherein-optionally the ketone groups in the precursors of formula I or II can be protected by acetal or ketal groups such as for example 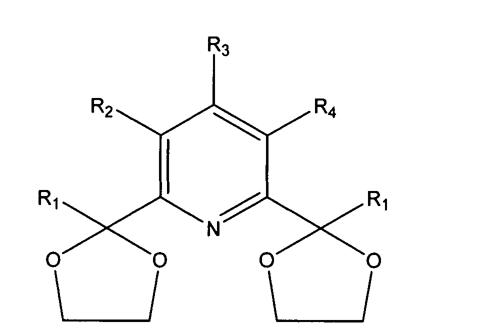 or 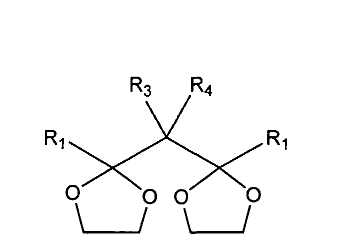
e) anchoring with a covalent bond by addition or substitution or condensation reactions, the precursor compound of step d) onto the "linker" or arm;
f) optionally reacting in an acid medium the component of step e) with a first amine R⁵-NH₂ and/or with a second amine R⁶-NH₂ wherein R⁵ and R⁶ are the same or different and are hydrocarbyl, substituted hydrocarbyl, inert functional group, preferably substituted or unsubstituted aryl or cycloalkyl, in order to prepare a ligand of formula III if the starting precursor is of formula I or a ligand of formula IV if the starting precursor is of formula II 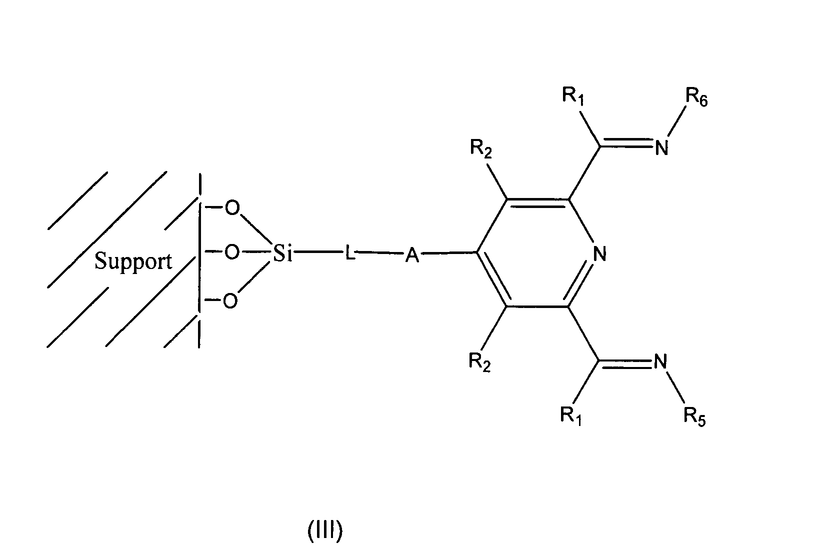 or 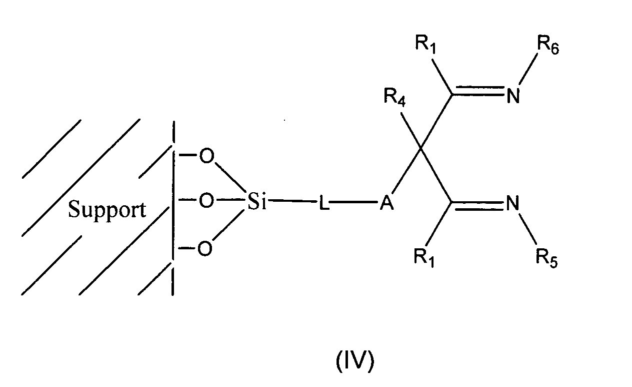 wherein A represents the part of the ligand resulting from the reaction between X and R3;
g) complexing a metal compound MYₘ dissolved in a polar solvent with the ligand of step f) wherein the metal M is a Group 8, 9 or 10 metal of the Periodic Table or is a lanthanide or V or Mn, wherein Y is a halogen or alcoholate or carboxylate or phosphate or aryl or alkyl or a borate such as for example BF₄ or B (perfluorinated Aryl)₄ or PF₆, and m is an integer equal to the valence of metal M, in order to provide supported complexes V or VI; 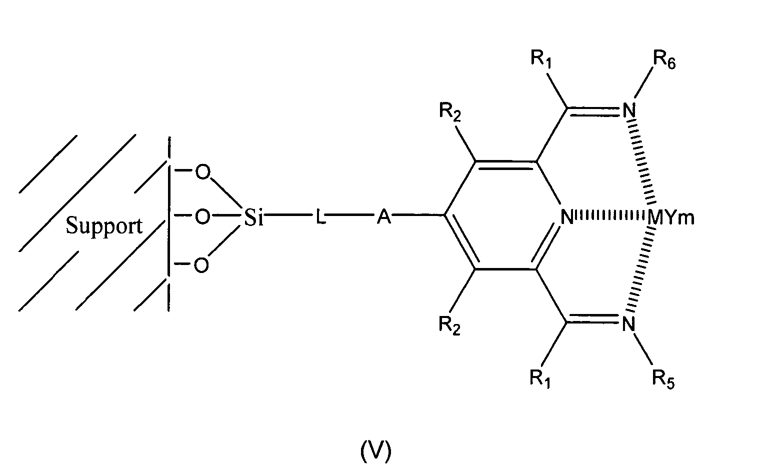 or 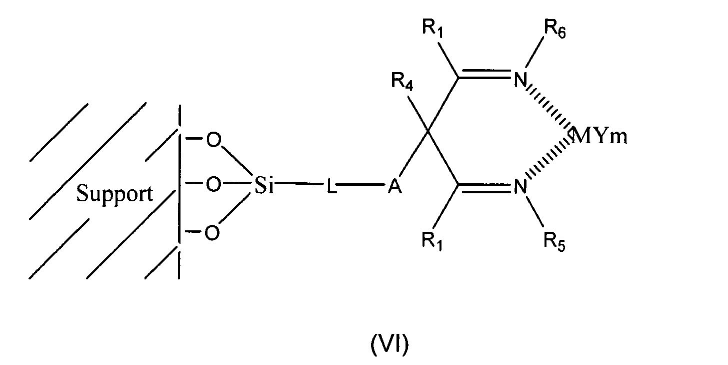
h) retrieving a supported transition metal complex characterised in that the metallic centres are dispersed on and are kept away from the surface of the support.

In a second embodiment according to the present invention, wherein the silane of step b) (i) has a functional group that is NH₂, the precursor of step d) to be anchored onto said silane is a ketone, preferably an alpha or beta di-ketone or a bis-acyl-pyridine or salicylaldehyde. Optionally, if the precursor is a di-ketone, one amine R⁵-NH₂ as described previously can be reacted with the un-reacted end of the di-ketone as seen in formula VII.

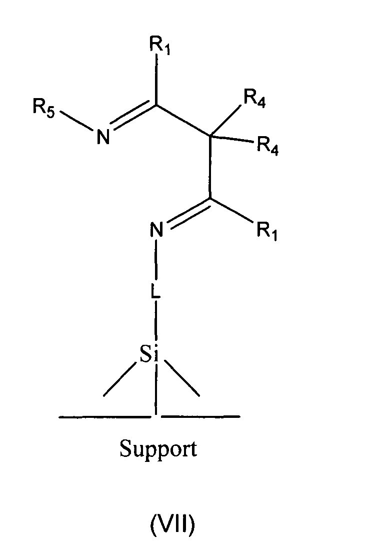

This latter reaction, if present, is available if there is sufficient dispersion of the functional groups, to prevent the di-ketone to form "bridges " between two neighboring functional groups as seen in formula VIII.

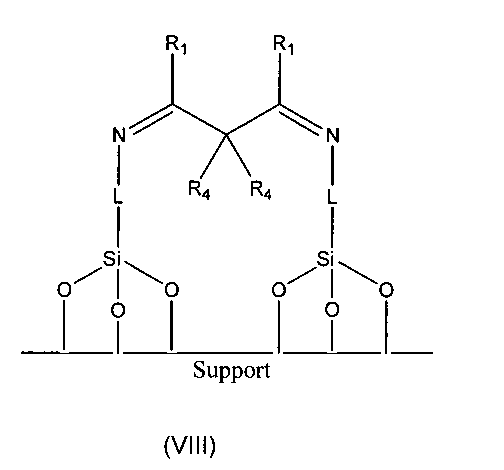

If such "bridges" are formed the role of dispersion is to keep the functional groups away from one another, thereby favouring the formation of monosites.

In this second embodiment, a metal compound is also complexed with the ligand. The metal can be selected from the same list as that disclosed in the first embodiment according to the present invention in order to obtain supported complexes IX and X. Additionally the metal can be selected from Zr, Hf or Ti. The most preferred metal is Zr when the grafted ligand is N,N'-bis-salicylidenediamine (Salen). 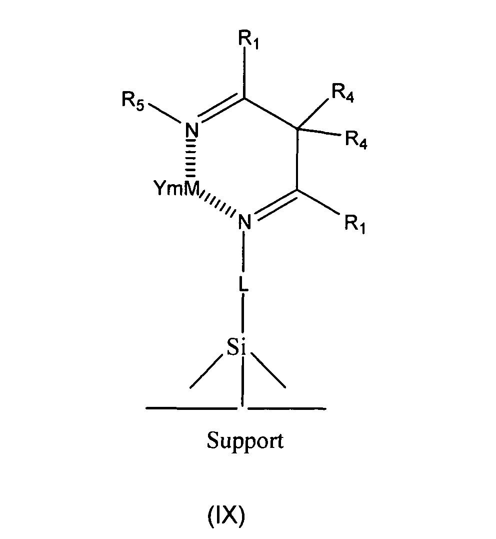 or

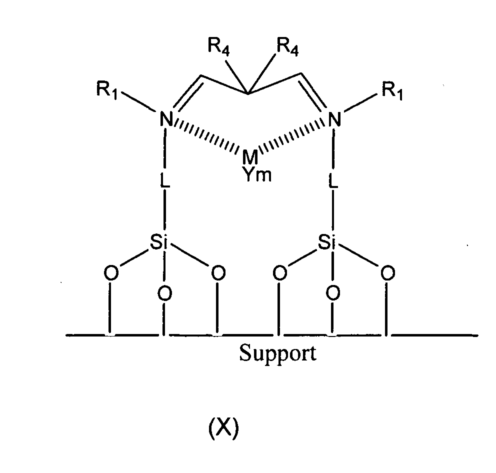

In a third embodiment according to the present invention, the compounds of steps d) and f) can be reacted together before the anchoring step e) in order to provide a molecule of formula XI or XII, respectively the reaction product of precursor I or precursor II with the amines. 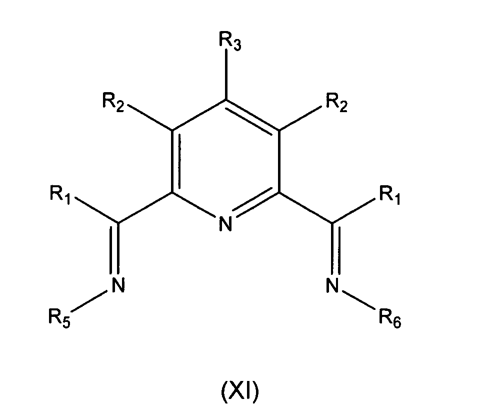 or

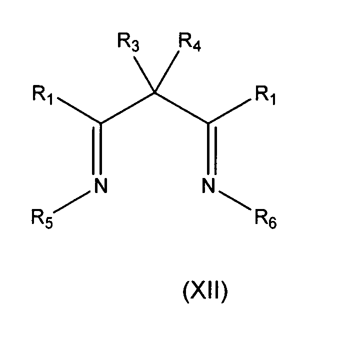

Alternatively, metal M can be selected from Zr, Hf, Ti and the precursor is then of formula XIII.

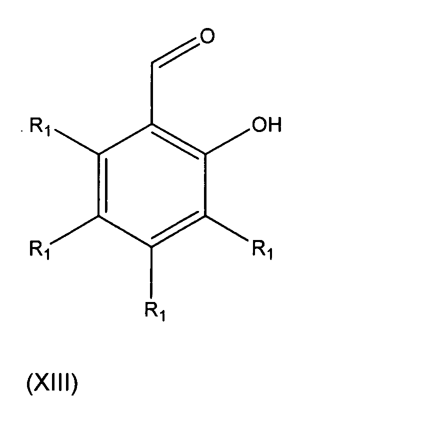

The porous support is advantageously chosen from one or more silica or TiO₂ or alumina or organic polymers such as for example cross-linked polystyrene or functionalised polypropylene, or mixtures thereof. Preferably it is silica.

The porous mineral oxide particles preferably have at least one of the following characteristics:
- they include pores having a diameter ranging from 3.5 to 30 nm;
- they have a porosity ranging from 0.4 to 4 cm³ /g;
- they have a specific surface area ranging from 100 to 1500 m² /g; and
- they have an average diameter ranging from 0.1 to 500 µm.

The support may be of various kinds. Depending on its nature, its state of hydration or hydroxylation and its ability to retain water, it may be necessary to submit it to a dehydration treatment of greater or lesser intensity depending upon the desired surface content of --OH radicals.

Those skilled in the art may determine, by routine tests, the dehydration and possibly also of dehydroxylation treatments that should be applied to the support, depending on the desired surface content of --OH radicals.

More preferably, the starting support is made of silica. Typically, the silica may be heated between 100 and 1000 ° C and preferably between 140 and 800 ° C, under an inert gas atmosphere, such as for example under nitrogen or argon, at atmospheric pressure or under a vacuum of about 10⁻⁵ bars, for at least 60 minutes. For such heat treatment, the silica may be mixed, for example, with NH₄Cl so as to accelerate the dehydration.

In the silane of step b (i), if the "linker" L is a flexible arm, it can be selected from an alkyl having from 1 to 12 carbon atoms, an ether or a thioether. If the "linker" is a rigid arm, it can be selected from an aryl, a mono- or bi-phenyl, a naphtalene, a polyarylether or an ether di-phenol. Preferably the "linker" is a rigid arm and more preferably it is a phenyl. The effect of the rigid linker is to keep away the active sites from the support surface in order to limit undesirable interactions.

The functional group X must enable covalent bonding by addition or substitution reaction. It can be selected from a halogen, an hydroxyl, a carboxyl, an amino, an isocyanate or a glycidyl. Preferably, it is a halogen or an amino.

Preferably, the dispersing agent has the same reacting group as the silane with respect Si in the support.

The effect of the dispersing agent is to keep the functional group X, and later the active metallic sites, away from one another, thereby creating monosites. Excimers have been used to determine the efficacity of dispersion as their emission spectra allow to determine whether molecular entities are close to one another or not, said molecular entities being either free or linked to large molecules or to solids.

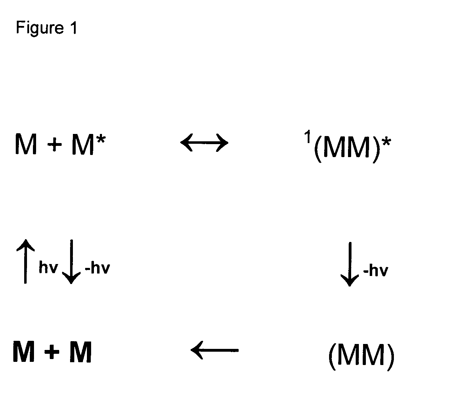

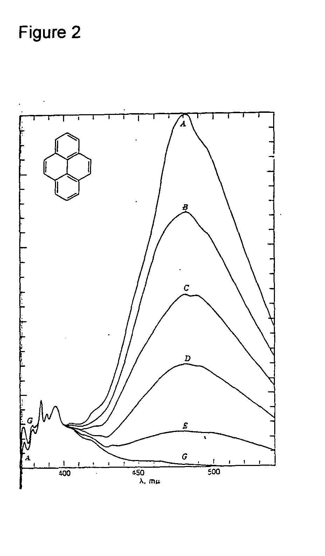

Excimer designates a pair of molecules, preferably identical molecules, formed by diffusion in a medium and wherein one of the molecules M* is in an excited state and the other molecule M is in the fundamental state. The interaction occurring between M and M* consumes a portion of M*'s excitation energy, the remaining energy being shared between the pair MM*. The pair MM* exists for a period of time of a few nanoseconds and then emits a radiation when returning towards a repulsive state as can be seen in Figure 1 representing the energy levels of the pair MM*. Because the complex is loose and because the final state is repulsive, the radiation's geometry is not fixed. Therefore, the excimer's emission spectrum is not structured and exhibits a red shift as can be seen for example in Figure 2 representing experimental spectra with pyrene.
To test the dispersion of the grafted functional groups, the latter may be reacted with a molecule that, like pyrene, may form an excimer if they are sufficiently close.

The grafting reaction is carried out at a temperature in the range of 60 to 120 °C under inert atmosphere.

The curing, if present, is carried out at a temperature from 150 to 200 °C and the passivation is carried out with a silylation agent such as chlorotrimethylsilane, hexamethyldisilazane, trimethylsilylimidazole, N,O-Bis(trimethylsilyl) trifluoroacetamide or another passivation agent that is inert with respect to the X functional group of the grafted silane.

In the precursors I and II of the present invention, the choice of substituents is broad and their size, position and nature are selected according to the desired properties of the resulting polymers.

In a preferred embodiment according to the present invention, the metal to be complexed is Fe or Co. Precursor I is selected and the preferred substituents R¹ are the same and are methyl, both R² are hydrogen and preferably R³ is halogen or hydroxyl or NH₂.
In another preferred embodiment according to the present invention, the metal to be complexed is Ni or Pd. Precursor II is selected and the preferred substituents R¹ are the same and are methyl, and preferably R³ is hydrogen, halogen or hydroxyl or NH₂ and R4 is hydrogen.

For the first and third embodiments according to the present invention, the anchoring reaction is carried out at a temperature in the range of 20 to 130 °C in an inert solvent such as tetrahydrofuran (THF), toluene, dichloromethane or chloroform, and for a period of time of from 6 to 48 hours.

For the second embodiment according to the present invention, the anchoring reaction is carried out under conditions that are similar to those of the first embodiment for the temperature, but with a medium that is necessarily acid and requires a solvent selected from toluene or alcohol.

Preferably, the reaction with the amines of step f) is carried out, and more preferably the two amines are present and R⁵ and R⁶ are the same. Most preferably, R⁵ and R⁶ are substituted phenyls.

The finished supported catalyst component is then filtered, washed and dried following usual methods.

The present invention also discloses the resulting supported transition metal compound obtainable by the method mentioned above, characterised in that the metallic sites are dispersed on and kept away from the surface of the support.

The catalyst grains are hardened. In addition, during polymerisation, the growing polymer can provoke fragmentation of the catalyst grains leading to a better morphology of the polymer.

The present invention further discloses a method for preparing an active supported transition metal catalyst system that comprises the steps of:
a) providing a supported transition metal catalyst component of general formula V, VI, IX or X; 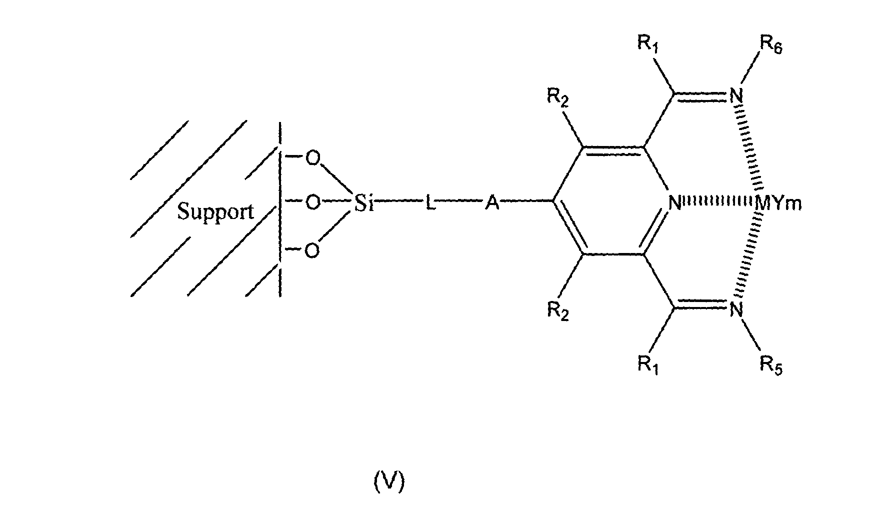 or 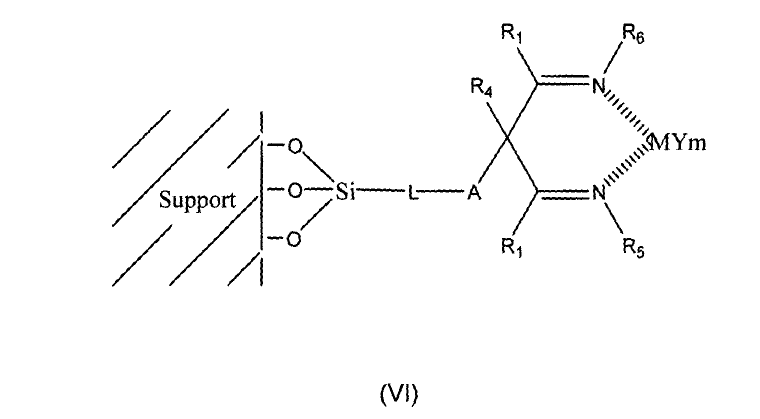 or 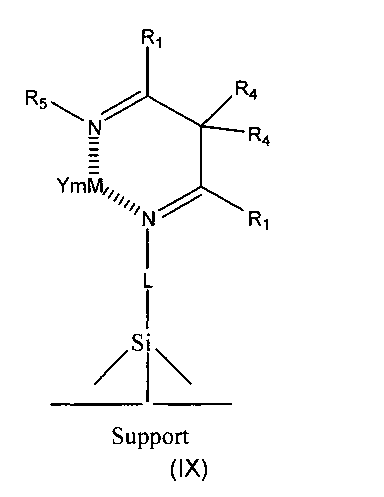 or 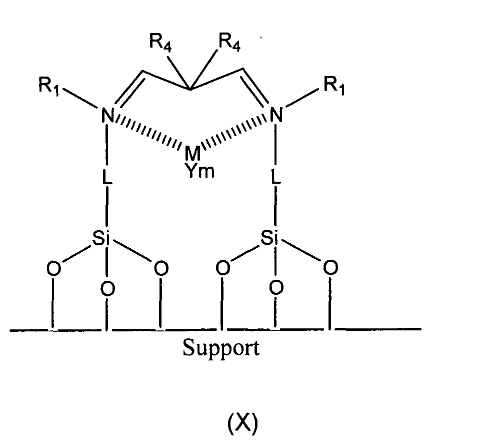
b) activating the supported transition metal complex with an activating agent having an ionising action.

The activating agent necessary to create active sites is an organometallic compound or a mixture thereof that is able to transform a metal-halogen bond into a metal-carbon bond. It can be selected from an alkylated derivative of Al.

Preferably, it is selected from an alkylated derivative of aluminium of formula (XIV)

AlR^{a}ₙX'₃₋ₙ (XIV)

wherein the R^{a} groups, may be the same or different, and are a substituted or unsubstituted alkyl, containing from 1 to 12 carbon atoms such as for example ethyl, isobutyl, n-hexyl and n-octyl or an alkoxy or an aryl and X' is a halogen or hydrogen, n is an integer from 1 to 3, with the restriction that at least one R^{a} group is an alkyl. Preferably, the alkylating agent is an aluminium alkyl, and more preferably it is triisobutylaluminium (TIBAL) or triethylaluminium (TEAL). Another preferred alkylating agent is aluminoxane.

The alumoxanes that can be used in the present invention are well known and preferably comprise oligomeric linear and/or cyclic alkyl alumoxanes represented by the formula (A): 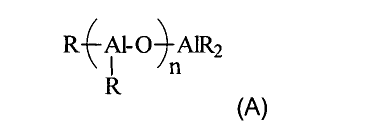 for oligomeric linear alumoxanes; and formula (B) 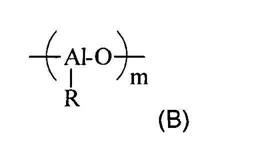 for oligomeric cyclic alumoxanes,
wherein n is 1-40, preferably 10-20; m is 3-40, preferably 3-20; and R is a C₁-C₈ alkyl group, preferably methyl. Generally, in the preparation of alumoxanes from, for example, aluminium trimethyl and water, a mixture of linear and cyclic compounds is obtained.

Alternatively, a borane or borate can also be used as cocatalyst, but the metal complex must first be treated with an alkylating agent. Suitable boron-containing activating agents may comprise a triphenylcarbenium boronate, such as tetrakis-pentafluorophenyl-borato-triphenylcarbenium as described in EP-A-0427696: 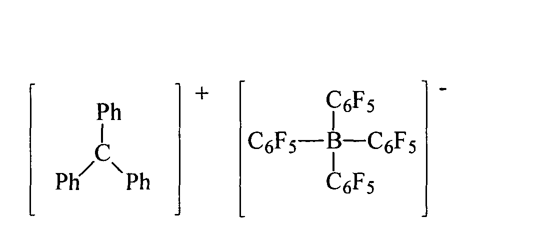 or those of the general formula below, as described in EP-A-0277004 (page 6, line 30 to page 7, line 7):

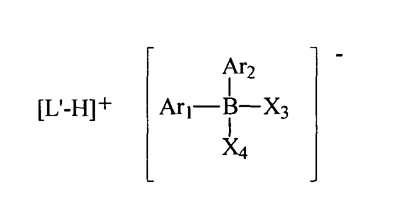

These cocatalysts are used in large excess with respect to the metal. When aluminium alkyl is used the ratio AI/M of aluminium over metal is of from 100 to 300. When aluminoxane is used the ratio AI/M is of 5 to 2000.

This invention also provides an active catalyst system for the polymerisation of olefins.

This invention further provides a method for oligomerising or polymerising olefins that comprises the steps of:
a) providing a supported transition metal catalyst component of formula V, VI, IX or X. 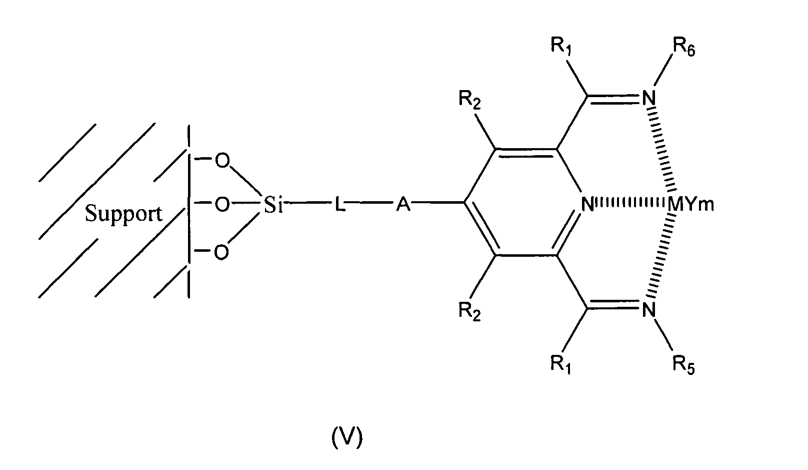 or 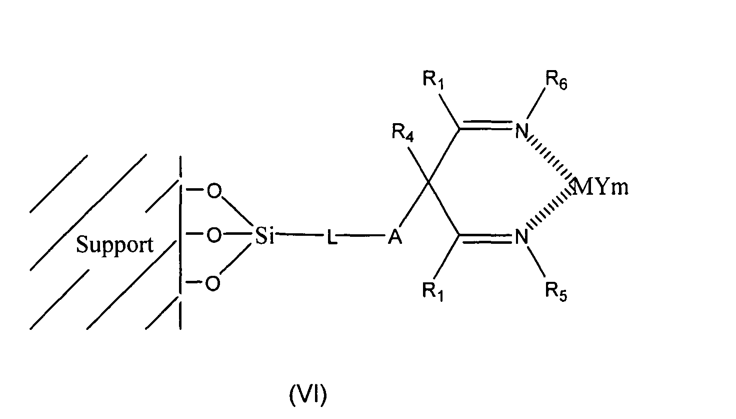 or 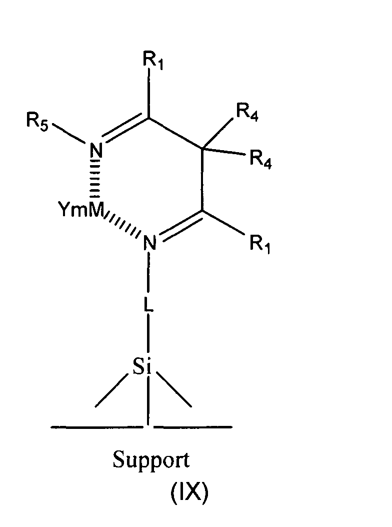 or 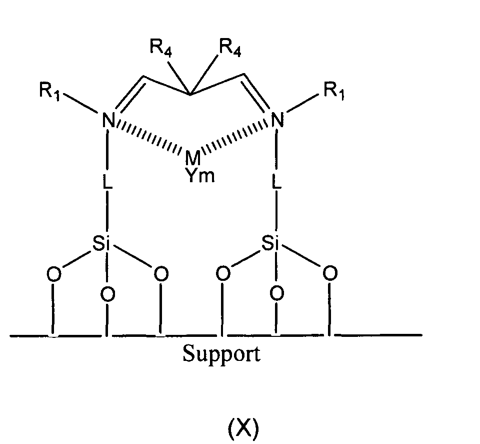
b) activating the catalyst component with an activating agent having an ionising action;
c) injecting the monomer and optional comonomer into the reactor;
d) maintaining under polymerising conditions;
e) retrieving a polymer with controlled morphology.

The polymers obtainable with the supported catalyst system of the present invention have a controlled morphology. In addition, the polymer resin is flowing freely which prevents reactor fouling.

The monomers that can be used in the present invention are alpha-olefins, preferably ethylene and propylene.

### List of Figures.

Figure 1 represents the energy level of the excimer MM*.

Figure 2 represents the experimental spectra A to G obtained with several concentrations of pyrene with cyclohexane as solvent. The concentrations of pyrene are as follows:
A : 10⁻² mol/l
B : 7.75 10⁻³ mol/l
C : 5.5 10⁻³ mol/l
D : 3.25 10⁻³ mol/l
E : 10⁻³ mol/l
G : 10⁻⁴ mol/l

The figure is copied from Birks and Christophorou in Spectrochimica, 19, 401, 1963.

### Examples.

The starting material for the support was silica purchased from Grace Davisson under the name G5H. It had a specific surface area of 515 m²/g, a pore volume of 1.85 cm³/g, a pore diameter of 14.3 nm and an index (Brunauer-Emmet-Teller) C_{BET} of 103.

General procedure concerning the grafting by coating experiments *:
*This procedure was adapted from previous work: "*Towards total hydrophobisation* of *MCM-41 silica surface*," T. Martin, A. Galarneau, D. Brunel, V. Izard, V. Hulea, A.C. Blanc, S. Abramson, F. Di Renzo and F. Fajula. *Stud. Surf. Sci. Catal.,* 2001, 135, 29-O-02.

### Functionalisation

The silica support (3g) was pre-activated by heating at 180°C under vacuum (1Torr) for 18h. It was then cooled to room temperature under argon, and dry toluene (90 mL) was added along with the grafting agents (5 molecules per nm²).

When the grafting agent was 4-chloromethylphenyltrimethoxysilane only, 3g (2.7 mL; 12 mmol) of the treated silane were used.
When the grafting agent 4-chloromethylphenyltrimethoxysilane was diluted with phenyltrimethoxysilane, a mixture of 4-chloromethylphenyltrimethoxysilane (0.3 g; 0.27 mL; 1.2 mmol) and phenyltrimethoxysilane ( 2.68 g; 2.03 mL; 10.87 mmol ) were added in a ratio of 1 equiv. of 4-chloromethylphenyltrimethoxysilane to 9 equiv. of phenyltrimethoxysilane.

When the grafting agent was *para*-aminophenyltrimethoxysilane only, 2.66g (12.48 mmol) of the treated silane were used.
When the grafting agent *para*-aminophenyltrimethoxysilane was diluted with phenyltrimethoxysilane, a mixture of *para*-aminophenyltrimethoxysilane (0.53g ; 2.5 mmol) and phenyltrimethoxysilane ( 1.97 g; 1.86 mL; 9.96 mmol ) was added in a ratio of 2 equiv. of para-aminophenyltrimethoxysilane to 8 equiv. of phenyltrimethoxysilane.

Each suspension was stirred under argon at room temperature for 1 h. Then, water (224µL; 1,5 equiv per added silane), para-toluenesulfonic acid (118 mg; 0.05 equiv per added silane), ammonium fluoride (23 mg ;0.05 equiv. per added silane) were added to the reaction mixture that was stirred for 1 h at room temperature, then heated at 60°C for 6h, then at 120°C for 1h. During this last step an azeotropic distillation was carried out using a Dean-Starck apparatus.

The functionalised silicas were separated by filtration and successively washed with toluene (2x 200 mL), methanol (2x200 mL) , mixture of methanol : water (1 :1 volume ratio) (2x 200 mL ), methanol (1x200 mL) and diethyl ether (2x 200). Finally, the separated samples were subjected to Soxhlet extraction with a (1:1 volume ratio) mixture of dichloromethane:diethyl ether.

Curing of the functionalised silicas.
After grafting by coating, the grafted support was cured by heating at a temperature of 170 °C overnight. It was observed that the porous texture was preserved.

When the grafting agent was 4-chloromethylphenyltrimethoxysilane, the pore mean diameters decreased slowly to a value of about 10.2 nm and the C_{BET} decreased to a value of about 49. The water content was of about 2.2 % and the organic content was of about 21.5 %, corresponding to a quantity of grafts of about 1.8 grafts/nm².

When the grafting agent was *para*-aminophenyltrimethoxysilane, the pore mean diameters decreased slowly to a value of about 10.8 nm and the C_{BET} decreased to a value of about 67. The water content was of about 3.06 % and the organic content was of about 15.8 %, corresponding to a quantity of grafts of about 1,9 grafts/nm² (if rigid arms are grafted).

Passivation of the halogenohydrocarbylsilane-grafted silicas.

The materials containing tethered halogeno chains were evacuated at 150°c overnight for 8h, then after cooling to room temperature, they were suspended in dry toluene. *N,O*-bis(trimethylsilyl)trifluoroacetamide (2.8 mL, 14 mmol.g⁻¹), was added and the reaction mixtures were stirred at a temperature of 60°C overnight. The solids were separated by filtration and successively washed with toluene (2x200 mL ) , methanol (2x200 mL), dichloromethane (2x200 mL), diethyl ether (2x200mL). Finally, the solids were subjected to Soxhlet extraction with a (1:1) mixture of dichloromethane:diethyl ether.

After the passivation step, when the grafting agent was 4-chloromethylphenyltrimethoxysilane only, the pore mean diameters decreased slowly to a value of about 10.6 nm and the C_{BET} decreased to a value of about 42. The water content was of about 1.5 % and the organic content was of about 21.9 %. The quantity of grafts was of about 1.8 grafts/nm².

After the passivation step, when the grafting agent 4-chloromethylphenyltrimethoxysilane was diluted with phenyltrimethoxysilane in a ratio of 1 equiv. of 4-chloromethylphenyltrimethoxysilane to 9 equiv. of phenyltrimethoxysilane, the pore mean diameters decreased slowly to a value of about 11.4 nm and the C_{BET} decreased to a value of about 36. The water content was of about 1.7 % and the organic content was of about 16.9 %, corresponding to a quantity of grafts of about 1.8 grafts/nm² with 0.2 chloromethylphenylsilane grafts/nm².

Passivation of the aminohydrocarbylsilane-grafted silicas.

The passivation procedure was the same as that used for the previous functionalised silicas except that the trimethylsilane agent was chlorotrimethylsilane or preferably trimethylsilylimidazole .

After the passivation step, when the grafting agent was p-aminophenyltrimethoxysilane, the pore mean diameters was of about 12.3 nm and the C_{BET} decreased to a value of about 33. The water content was of about 1.1 % and the organic content was of about 15.76 %. The quantity of grafts was of about 1,9 grafts/nm².

After the passivation step, when the grafting agent *p*-aminophenyltrimethoxysilane was diluted with phenyltrimethoxysilane in a ratio of 2 equiv. of *p*-aminophényltrimethoxysilane to 8 equiv. of phenyltrimethoxysilane the pore mean diameters was of about 13.1 nm and the C_{BET} decreased to a value of about 28. The water content was of about 0.8 % and the organic content was of about 16 %. The quantity of grafts was of about 1,9 grafts/nm² with 0.38 *p*-aminophénylsilane grafts/nm².

### First embodiment for Fe.

Synthesis of 4-hydroxy-2,6-diacetylpyridine as an example of compound I.

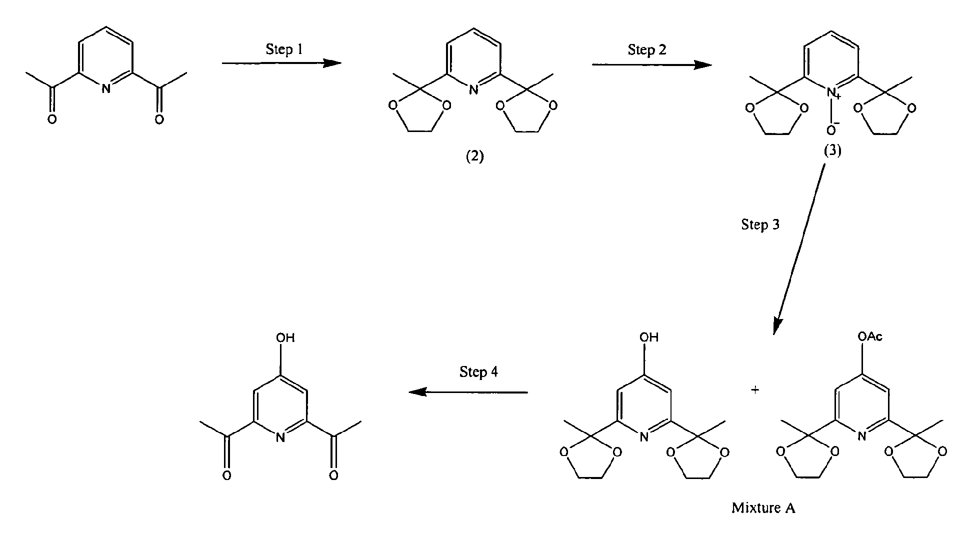

### Step 1.

To a solution of 2,6-diacetylpyridine (1.0 g; 6.13 mmol in 65mL of anhydrous toluene, 15.5 mL (282 mmol) of ethylene glycol and 6.5 mL (59.8.mmol) of chlorotrimethylsilane were added under argon . The reaction mixture was heated at 120°C for 24h in a flask equipped with a Dean-Stark apparatus to collect the azeotropic distillate.
The organic phase was washed two times with a K₂CO₃ (5%) aqueous solution (15mL), then two times with pure water (15 mL) then dried with MgSO₄. After distillation of the solvent under vacuum, 1.5g (6mmol ) of pure 2,6-{bis-ethyleneacetal}pyridine (2) were obtained .

### Step 2.

To a solution of 6.7 g of (100%) meta-chloroperbenzoic acid (mCPBA) in dichloromethane (200 mL) obtained from purification of a solution of commercial (58%) mCPBA, a solution of 2,6-{bis-ethyleneacetal}pyridine (3,2 g) in dichloromethane (50 mL) was slowly added . The reaction mixture was heated at 63°C for a week. After cooling The organic phase was washed three times with a K₂CO₃ (10%) aqueous solution (80 mL), then with pure water. The aqueous phases were assembled and extracted with dichloromethane (80 mL). The organic phases were assembled and dried with Na₂SO₄. After evaporation of the solvent, the collected products were separated on a flash chromatography column ( S.D.S silica of average pore diameter : 60 A and of particle size: 70-200µm) . The unreacted 2,6-{bis-ethyleneacetal}pyridine was collected using ethyl acetate as eluant. Then, 1.7 g of pure
2,6-{bis-ethyleneacetal}pyridine-N-oxyde (3) were collected with 50% yield using methanol as eluant.

### Step 3.

In a flask equipped with a condenser, 1g (mmol) of 2,6-{bis-ethyleneacetal}pyridine-N-oxyde (3) and acetic anhydride were stirred and heated at 135°C for 20h . After cooling, the medium was treated with Na₂CO₃ solution to reach a basic pH. The aqueous phase was extracted with diethyl ether (3 x 50 mL). The ether solution was dried and after the solvent evaporation, a mixture A containing only 4-acetyloxy-2,6-{bis-ethyleneacetal}pyridine and the 4-hydroxy-2,6-{bis-ethyleneacetal}pyridine was collected.

### Step 4.

0.8 g of the mixture **A** were dissolved into 25 mL of dioxane. 25 mL of HCl (1 N) aqueous solution were added and the resulting solution was heated at 90°C for 1 h. After cooling the solution was treated with a NaOH (1.3M) solution until basic pH. The aqueous phase was extracted with CH₂Cl₂ (3 x 50 mL.). The resulting aqueous phase was acidified with aqueous HCl (1N), then basified with NH₃, then evaporated. The collected material was extracted with CH₂Cl₂ (3 x 50 mL) This second organic phase was dried with Na₂SO₄, and pure 4-hydroxy-2,6-diacetylpyridine was obtained after solvent distillation under vacuum.

The first organic phase was dried with Na₂SO₄. After distillation of the solvent, the collected products contained 2,6-diacetylpyridine and 4-méthyl-2,6-diacetylpyridine as by-products.

Heterogeneisation of the 4-hydroxy-2,6-diacetylpyridine on chloromethylphenyl-grafted silica.
1- When the grafting agent was 4-chloromethylphenyltrimethoxysilane only :
   The ketone functions of 4-hydroxy-2,6-diacetylpyridine were firstly protected according to step one. Then a solution of protected diketone ( 0,86 g ; 3.2 mmol) , triethylamine (0.43 mL; 3 mmol) in solution in tetrahydrofurane (30 mL) was added to 1.2 g of passivated silica containing 4-chloromethylphenyltrimethoxysilane (n_{CI} = 1.6 mmol) previously activated at a temperature of 150°C overnight under vacuum. The suspension was heated under stirring at a temperature of 70°C for 30h. After cooling, the solid was separated by filtration, then washed successively with THF (2 x 50mL), MeOH (2 x 50mL), Et₂O (2 x 50mL), then with a mixture of CH₂Cl₂:Et₂O (1:1) in a Soxhlet apparatus.

### Ketone deprotection.

A solution of HCl (1N) aqueous in 25 mL of dioxane was added to 1.2 g of the previous solid previously activated at a temperature of 150°C under vacuum. The suspension was heated under stirring at 90°C for 1 hour. After cooling, the solid was separated by filtration, then washed successively with dioxane (2 x 50mL), MeOH (2 x 50 mL), Et₂O (2 x 50 mL) then a mixture of CH₂Cl₂:Et₂O (1:1) in a Soxhlet apparatus.

### Imine

After the activation step at a temperature of 150°C under vacuum overnight, 1.3 g of the previous solid was then contacted with 2,6-diisopropyl-aniline (0.57 g, 3.2 mmol) and para-toluene sulfonic acid (0.152 g, 0.8 mmol) in solution in toluene (50 mL). The suspension was heated under stirring at 120°C for 30 hours with an azeotropic distillation. After cooling, the solid was separated by filtration, then washed successively with toluene (2 x 50 mL), CH₂Cl₂ (2 x 50 mL), Et₂O (2 x 50 mL) then a mixture of CH₂Cl₂:Et₂O (1:1) in a Soxhlet apparatus.

### Metallation

1.5 g of the previous solid was evacuated at 150°C overnight. After cooling, a solution of anhydrous FeCl₂ (0.2 g, 1,6 mmol) in dry THF (40 mL) was added and the suspension was refluxed under nitrogen for 18h .
The solid was separated by filtration, then washed successively with THF (3 x 50 mL), pentane (3 x 50 mL), then dried under vacuum at room temperature.

### Second embodiment for Fe

### Anchorage of 2,6-diacetylpyridine.

0,25 g (1,5 mmol) of 2,6-diacetylpyridine and 0,145 mg (0,76 mmol) of para-toluenesulfonic acid in toluene (50 mL) were added to 1,5 g of passivated silica containing *p*-aminophenyltrimethoxysilane (n_{NH2} = 2.0 mmol) previously activated at a temperature of 150°C overnight under vacuum. The suspension was heated at 120°C for 30h with an azeotropic distillation. After cooling, the solid was separated by filtration then washed successively with toluene (2x50mL), CH₂Cl₂ (2x50mL), Et₂O (2x50mL) then with a mixture of CH₂Cl₂:Et₂O (1:1) in a Soxhlet apparatus.

### Reaction of the un-reacted end of diketone

After the activation step at a temperature of 150°C under vacuum overnight, 1.7 g of the previous solid (n_{acétylpyridine} = 2.0 mmol) was then contacted with 2,6-diisopropyl-aniline (0.57 g, 3.2 mmol) and para-toluene sulfonic acid (0.152 g, 0.8 mmol) in solution in toluene (50 mL). The suspension was heated under stirring at 120°C for 30 hours with an azeotropic distillation. After cooling, the solid was separated by filtration, then washed successively with toluene (2 x 50 mL), CH₂Cl₂ (2 x 50 mL), Et₂O (2 x 50 mL) then a mixture of CH₂Cl₂:Et₂O (1:1) in a Soxhlet apparatus.

### Metallation

2.0 g of the previous solid was evacuated under vacuum at 150°C overnight (n_{bis(imine)pyridine} = 2.0 mmol). After cooling, a solution of anhydrous FeCl₂ (0,25 g, 2 mmol) in dry THF (40 mL) was added and the suspension was refluxed under nitrogen for 18h .
The solid was separated by filtration, then washed successively with THF (3 x 50 mL), pentane (3 x 50 mL), then dried under vacuum at room temperature.

### Third embodiment for Fe.

### Heterogeneïsation of the 4-hydroxyterpyridine.

0,8 g. (3.2 mmol) of 4-hydroxyterpyridine and 0.43 mL (3 mmol). triethylamine in solution in tetrahydrofurane (30 mL) were added to 1.2 g of passivated silica containing 4-chloromethylphenyltrimethoxysilane (n_{Cl} = 1.6 mmol) previously activated at a temperature of 150°C overnight under vacuum. The suspension was then heated under stirring at 70°C for 30h . After cooling, the solid was separated by filtration, then washed successively with THF (2 x 50mL), MeOH (2 x 50mL), Et₂O (2 x 50mL), then with a mixture of CH₂Cl₂:Et₂O (1:1) in a soxhlet apparatus.

### Metallation

1 g of silica containing terpyridine was evacuated at 150°C overnight. After cooling, a solution of anhydrous FeCl₂ (1.6 mmol) in dry THF (40 mL) was added and the suspension was refluxed under nitrogen for 18h. The solid was separated by filtration, then washed successively with THF (3 x 50 mL), pentane (3 x 50 mL), then dried under vacuum at room temperature.

## Claims

1. A method for supporting late transition metal complex that comprises the steps of:
a) providing a support prepared from a porous material;
b) grafting on the surface of the support:
(i) a silane of general formula RₙR'₃₋ₙ - Si - L - X wherein R is alkyl having from 1 to 4 carbon atoms and the R are the same or different, R' is halogen or is alkoxy having from 1 to 12 carbon atoms and the R' are the same or different, n is an integer from 0 to 2, L is a rigid or a flexible "linker" or arm and X is a functional group enabling covalent bonding by addition or substitution reaction;
(ii) a dispersing agent that is compatible with the silane (i) in morphology, in size, in nature and in grafting capability onto the support, but has no functional group X, and wherein the ratio of silane to dispersing agent is of from 1:20 to 1:1, preferably, 1:10 to 1:8;
c) optionally curing and passivating the grafted support;
d) providing a precursor compound of general formula I or II dissolved in a polar solvent 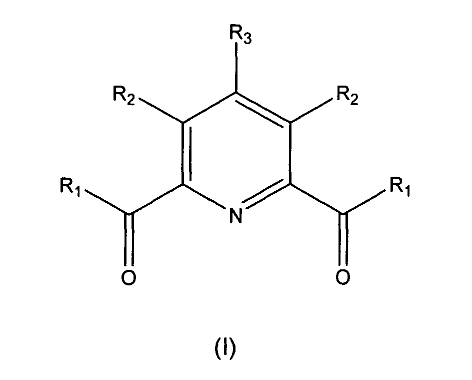 or 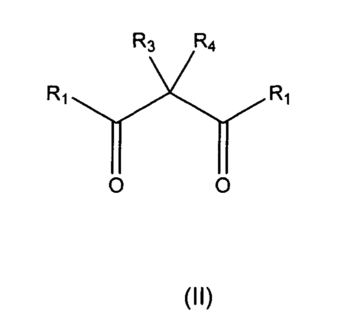 wherein R¹ is hydrogen, hydrocarbyl, substituted hydrocarbyl, inert functional group and the R¹ are the same or different, R² is hydrogen, hydrocarbyl, substituted hydrocarbyl, inert functional group and the R² are the same or different, R³ is hydrogen or functional substituted hydrocarbyl, reactive functional group and this functional group is able to react with X of the silane and R⁴ is hydrogen, hydrocarbyl, substituted hydrocarbyl, inert functional group and wherein-optionally the ketone groups in the precursors of formula I or II can be protected by acetal or ketal groups such as for example 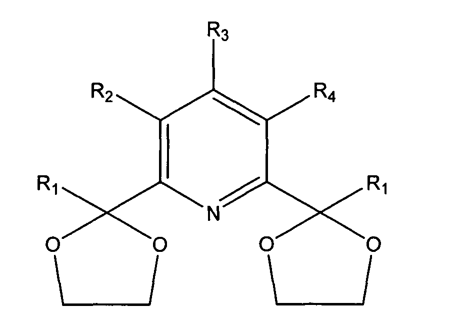 or 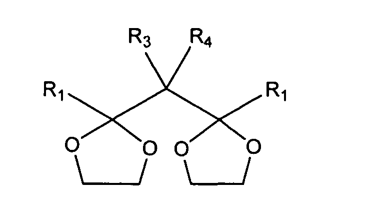
e) anchoring with a covalent bond by addition or substitution or condensation reactions, the precursor compound of step d) onto the "linker" or arm;
f) optionally reacting in an acid medium the component of step e) with a first amine R⁵-NH₂ and/or with a second amine R⁶-NH₂ wherein R⁵ and R⁶ are the same or different and are hydrocarbyl, substituted hydrocarbyl, inert functional group, preferably substituted or unsubstituted aryl or cycloalkyl, in order to prepare a ligand of formula III if the starting precursor is of formula I or a ligand of formula IV if the starting precursor is of formula II; provide ligands of formula III and IV 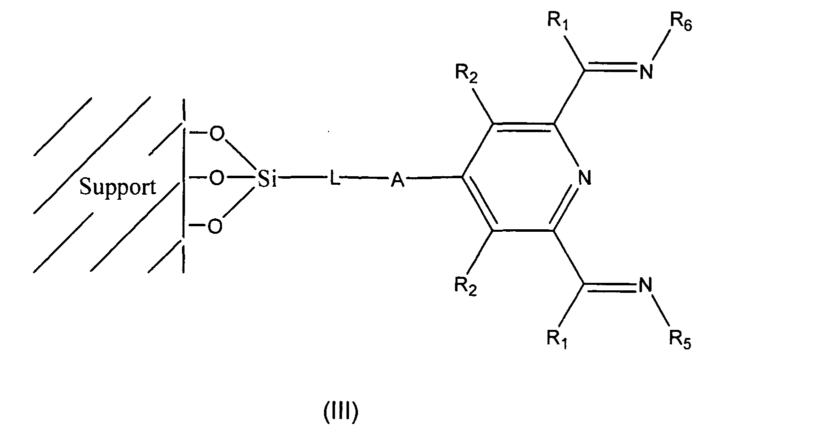 or 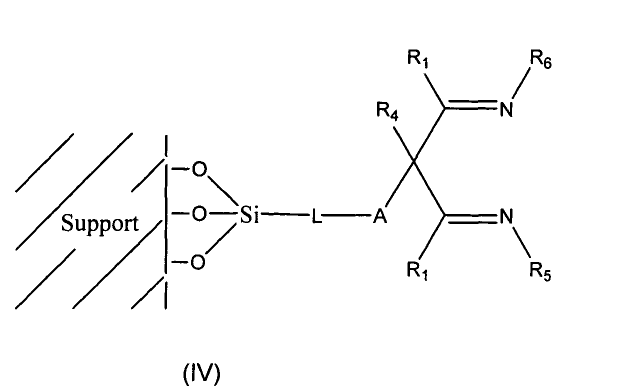
g) complexing a metal compound MYₘ dissolved in a polar solvent with the ligand of step f) wherein the metal M is a Group 8, 9 or 10 metal of the Periodic Table or is a lanthanide or V or Mn, wherein Y is a halogen or alcoholate or carboxylate or phosphate or alkyl or aryl or a borate such as for example BF₄ or B (perfluorinated Aryl)₄ or PF₆ and m is an integer equal to the valence of metal M, in order_to provide supported complexes V or VI; 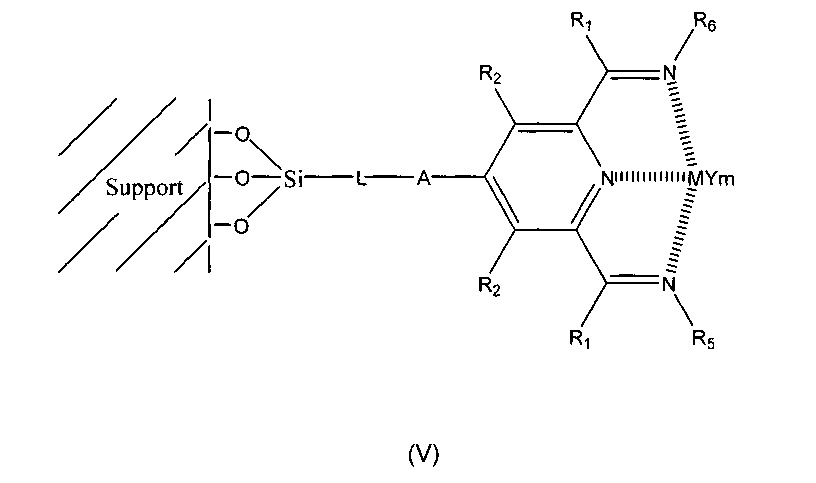 or 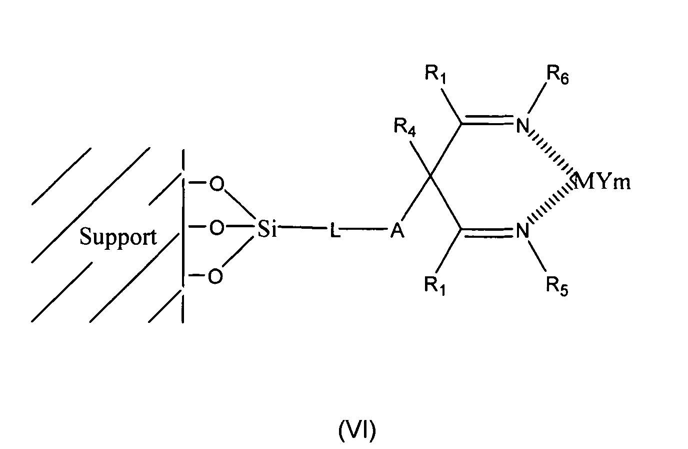
h) retrieving a supported transition metal complex **characterised in that** the metallic centres are dispersed and are kept away from the surface of the support.

2. The method of claim 1 wherein the support is silica.

3. The method of claim 1 or claim 2 wherein the "linker" is a flexible arm and is an alkyl or an ether or a thioether.

4. The method of claim 1 or claim 2 wherein the "linker" is a rigid arm and is selected from aryl, naphtalene, polyarylether or ether di-phenol.

5. The method of claim 4 wherein the rigid arm is a phenyl.

6. The method according to any one of the preceding claims wherein the functional group is a halogen or an amino.

7. The method according to any one of the preceding claims wherein the metal is Fe or Co and the precursor is of formula I.

8. The method according to any one of claims 1 to 6 wherein the metal is Ni or Pd and the precursor is of formula II.

9. The method according to any of claims 1 to 6 wherein the metal is Zr, Hf, Ti and the precursor is of formula XIII.

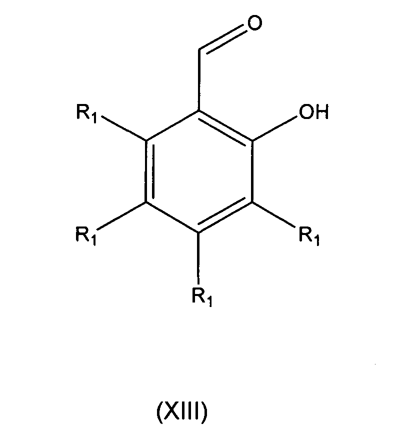

10. The method according to any one of the preceding claims wherein the substituents R¹ in formula I or in formula II are the same and are substituted methyl, the substituents R² in formula I are hydrogen, the substituent R³ in formula I or in formula II is hydroxyl or NH₂ and the substituent R⁴ in formula II is hydrogen.

11. The method according to any one of the preceding claims wherein the reaction with the alkyl- or aryl-amines of step f) is carried out and wherein R⁵ and R⁶ are the same.

12. The method according to claim 11 wherein R⁵ and R⁶ are substituted phenyls.

13. A supported transition metal catalyst component obtainable by the method of any one of claims 1 to 12.

14. A method for preparing a supported transition metal catalyst system that comprises the steps of:
a) providing the supported transition metal component of claim 13;
b) activating said catalyst component with an activating agent having an ionising action.

15. The method of claim 14 wherein the activating agent is an aluminium alkyl or an aluminoxane.

16. An active supported transition metal catalyst system obtainable by the method of claim 14 or claim 15.

17. A method for oligomerising or polymerising olefins that comprises the steps of:
a) injecting the active supported catalyst system of claim 16 into the reactor;
b) injecting a monomer and an optional comonomer in the reactor;
c) maintaining under polymerisation conditions;
d) retrieving a polymer of controlled morphology.

18. The method of claim 17 wherein the monomer is ethylene or propylene.

19. Polymer of controlled morphology obtainable by the method of claim 17 or claim 18.
